# EUROPÄISCHE PATENTSCHRIFT

(11) **EP 0 401 596 B1**
(45) Veröffentlichungstag und Bekanntmachung des Hinweises auf die Patenterteilung: **21.04.1993**
(21) Anmeldenummer: 90109755.0
(22) Anmeldetag: 22.05.1990
(51) Int. Cl.: B63J 3/02

(54) **Kurbelwellengetriebe**
Crankshaft drive
Transmission de vilebrequin

(30) Priorität: 06.06.1989 DE 3918385
(43) Veröffentlichungstag der Anmeldung: 12.12.1990
(73) Patentinhaber: RENK TACKE GmbH, D-86159 Augsburg (DE); GEBRÜDER SULZER AKTIENGESELLSCHAFT, CH-8401 Winterthur (CH)
(72) Erfinder: Helmer, Wilhelm, D-4440 Rheine (DE); Brunner, Heinrich, CH-8404 Winterthur (CH)
(74) Vertreter: Vetter, Ewald Otto, Dipl.-Ing.

(56) Entgegenhaltungen:
- GB-A- 1 034 305
- US-A- 2 891 393
- US-A- 3 817 056

## Beschreibung

Die Erfindung bezieht sich auf ein Übersetzungsgetriebe zur direkten Verbindung der Kurbelwelle eines Hauptmotors, vorzugsweise Dieselmotors, am sogenannten freien Wellen- bzw. Flanschende zum Antrieb von Generatoren, Gebläsen, Pumpen, Regelgetrieben und sonstiger Aggregate zur Erzielung konstanter Stromfrequenzen.

Solche Stirnradgetriebe am freien Wellenende von Verbrennungsmotoren - bekannt als "Free-End" oder "Power-Take-Off" -Getriebe - sind mit ihren Antriebswellen über flexible Kupplungen mit den Flanschen der Kurbelwellen verbunden, wobei die zwei- oder mehrteiligen Getriebegehäuse mit dem Kurbelwellengehäuse des Motors fest verschraubt werden und somit kein eigenes Fundament haben.

Eine alternative Ausführung hierzu bilden Getriebegehäuse in freistehender Ausführung mit Fußleisten, die entweder auf dem Motorfundament oder auf einem getrennten Fundament fest, wahlweise elastisch, angeordnet sind, um die Übertragung von Körperschall zu mindern.

Im Oberbegriff des Patentanspruchs 1 werden diese Übersetzungsgetriebe, allgemein bekannt auch als Abzweiggetriebe, zur besseren Unterscheidung der Kategorie der Kurbelwellengetriebe zugeordnet und sind in verschiedenen Ausführung als Anbaugetriebe durch die RENK TACKE-Druckschrift RT013/3.88-10e bekannt geworden.

Der Erfindung liegt die Aufgabe zugrunde, ein Zahnradgetriebe der bekannten Art derart zu gestalten, bei dem die drehschwingungsdämpfende Kupplung, wie auf Seite 7 vorgenannter Druckschrift dargestellt, nicht direkt mit der Kurbelwelle zu verbinden, sondern in dem Antriebsrad des Getriebes anzuordnen sowie über eine doppelkardanische im Stillstand schaltbare Zahngelenkspindel das Drehmoment kraftschlüssig zu übertragen, um bei notwendiger Inspektion oder Austausch von Einzelteilen eine schnelle Abtrennung der kompletten Einrichtung vom Antriebsmotor zu ermöglichen und die Manöverierfähigkeit des Schiffes nicht zu gefährden. Diese Aufgabe wird gemäß der Erfindung durch die Merkmale des Patentanspruches 1 gelöst. Im Betrieb, wie beim Aus- oder Einkuppeln der Zahngelenkspindel durch achsiales Verschieben derselben innerhalb des Verzahnungsbereiches vom Kurbelwellenflansch, bildet diese gemeinsam mit der drehschwingungsdämpfenden Kupplung und angeschraubtem Antriebsrad des Getriebes eine Einheit, weshalb letzteres sich im Getriebehäuse zwar ebenfalls mitverschiebt, aber die Zahneingriffe der Zahnräder erhalten bleiben.

Die Erfindung bietet gegenüber der bisher bekannten Bauart neben wirtschaftlichen insbesondere technische Vorteile.

Hierzu gehören, daß unabhängig von der Getriebeausführung als angebautes oder freistehendes Getriebe auch auf Fahrt beispielsweise Teile der drehschwingungsdämpfenden Kupplung ausgewechselt werden können, da nach dem Entkuppeln die Kupplung steht und somit zugänglich ist, während der Motor mit dem Propeller weiterläuft. Es ist bekannt, daß Kurbelwellen von Zweitakt- und Viertaktmotoren in Abhängigkeit ihrer Größe, Leistung, Dimensionierung, Zylinderzahl, Hub, Drehzahl und Lagerabstände unterschiedlich große Durchbiegungen verursachen, die sich am Antriebsflansch als außermittige Winkelverlagerungen u.a. in Form von Taumelbewegungen bemerkbar machen, welche sich besonders kraß bei Zündaussetzern auswirken können.

Solche Winkelverlagerungen im Zusammenwirken mit dem Radialspiel des motorseitigen kurbelwellenseitigen Außenlagers verändern im Betrieb ständig die Fluchtungswerte zum Getriebe hin.

Hinzukommen ferner Bearbeitungsabweichungen an den Getriebegehäusen sowie nicht unbeträchtliche Wärmeausdehnungen der Kurbelwellen in Richtung des Getriebelagers, da sich meistens das Axialdrucklager des Motors an der Propellerseite befindet.

Verstärkt treten naturgemäß Fluchtungsabweichungen bei solchen Antrieben auf, wo Motoren und Getriebe auf getrennten Fundamenten oder elastisch auf Fundamenten befestigt werden müssen, da neben Fundamentverzügen, Schiffsbewegungen und die elastischen Auflagen solche nachhaltig beeinflussen.

Bei derartigen in der Auswirkung entstehenden komplexen Fluchtungsebenen zwischen Kurbel- und Getriebewelle sind meistens einfachkardanische Kupplungen überfordert, weshalb die Erfindung ein doppelkardanisches Verbindungsglied in Form einer Zahngelenkspindel, die sämtliche Arten kombinierter Winkel-, Parallel- und Axialverlagerungen ohne große Rückstellkräfte überträgt, vorsieht und die Wechselmomente des Motors über eine im Antriebsrad des Getriebes integrierte drehschwingungsdämpfende Kupplung absorbiert werden.

Ziel und Aufgabe der Erfindung ist es ferner, die Übertragung unzulässiger dynamischer Zusatzkräfte, welche aus Wechselmomentenund Drehschwingungsverläufen des Antriebssystems über die Zahngelenkspindel in das Getriebe mit seinen einzelnen Getriebestufen sowie nachgeschalteter Aggregate zu vermeiden, damit ein Höchstmaß an Betriebssicherheit im Dauerbetrieb individuell selbst bei extremen Betriebsbedingungen erreicht wird.

Hierzu gehören Ausgestaltungen nach den Unteransprüchen 2 bis 7 und im folgenden werden mit Bezug auf die Zeichnungen beide Ausführungsarten von Kurbelwellengetrieben gezeigt.

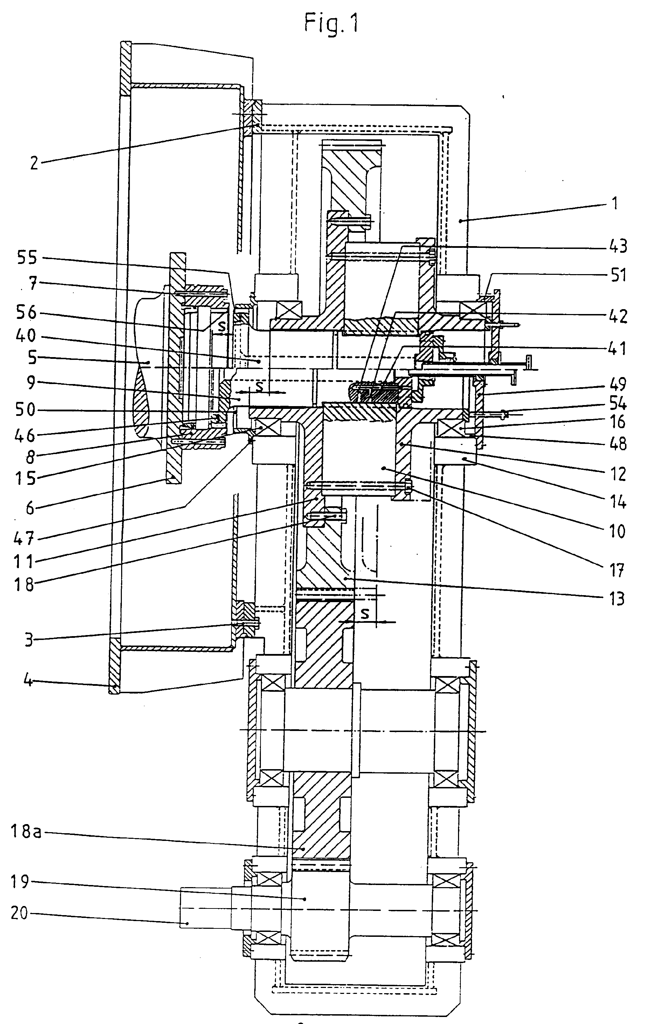

Fig. 1 zeigt ein Anbaugetriebe (1) mit abgehobenem Oberteil und im Schnitt dargestellten Hauptkomponenten, welches ausschließlich mit seinem Flansch (2) durch Schrauben (3) mit dem Kurbelwellengehäuse (4) des - nicht gezeigten - Antriebsmotors fest verbunden ist.

An der Kurbelwelle (5), die vorzugsweise mit angeschmiedetem Flansch (6) ausgebildet ist, wird mittels Schrauben (7) ein Zahnkranz (8) befestigt, über den das Drehmoment auf die Zahngelenkspindel (9) zu der drehschwingungsdämpfenden Kupplung (10) übertragen wird.

Die Kupplung (10) stützt sich über die als Hohlwellen ausgebildeten Träger (11, 12) in dem Antriebsrad (13) des als Übersetzungsgetriebe dargestellten Anbaugetriebes (1) in seinem Gehäuse (14) auf den Lagern (15, 16) ab.

Gemäß Zeichnung sind Kupplung (10) mit Trägern (11, 12) und Antriebsrad (13) unter Verwendung von Schrauben (17, 18) als geschlossene Antriebseinheit ausgeführt, welche die Motorleistung über ein Zwischenrad (18a) an das Abtriebsritzel (19) weitergibt.

Vom Wellenende (20) werden nicht dargestellte Aggregate wie beispielsweise Regelgetriebe, Generatoren, Gebläse und Pumpen entsprechend dem Versorungskonzept des Schiffes angetrieben.

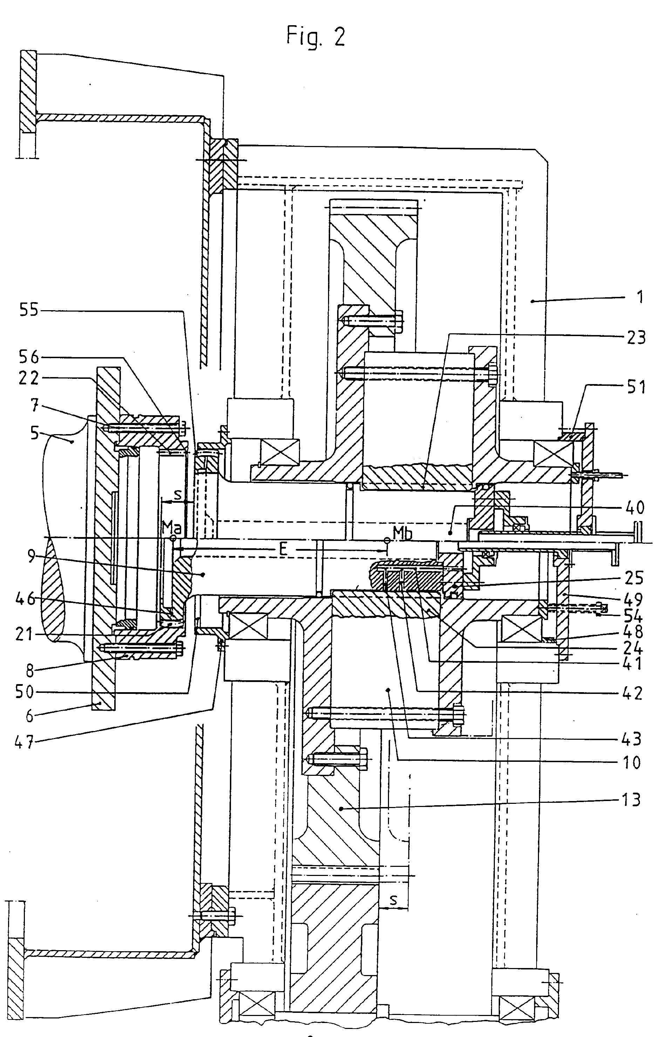

In Fig. 2 ist ein Teilausschnitt von Fig. 1 vergrößert dargestellt, um die Ausbildung wie auch Funktion wichtiger Einzelheiten zu verdeutlichen.

Die ballige Außenverzahnung (Bogenverzahnung 21) der Zahngelenkspindel (9) zentriert sich bei Kraftübertragung winkel- und axialbeweglich in der geraden Innenverzahnung (22) des Zahnkranzes (8) in der Zahnmitte "Ma".

Dadurch, daß auch in die Zahngelenkspindel (9) am anderen Ende eine gerade Außenverzahnung (23) eingeschnitten ist, in der beispielsweise Blattfedern (24) der drehschwingungsdämpfenden Kupplung (10) mit entsprechendem Zahnfuß- und Zahnflankenspiel eingreifen, entsteht der für ein doppelkardanisches System erforderliche zweite Drehpunkt "Mb" und die Zahngelenkspindel (9) wird in diesem Bereich axial durch die Kupplung (10), Verzahnung (23) sowie Endplatte (25) gehalten.

Infolge des relativ großen Abstandes "E" der beiden Drehpunkte "Ma" und "Mb" lassen sich bemerkenswert große, meistens kombinierte, Parallel- und Winkelverlagerungen zwischen Kurbelwelle (5) und Anbaugetriebe (1) ausgleichen.

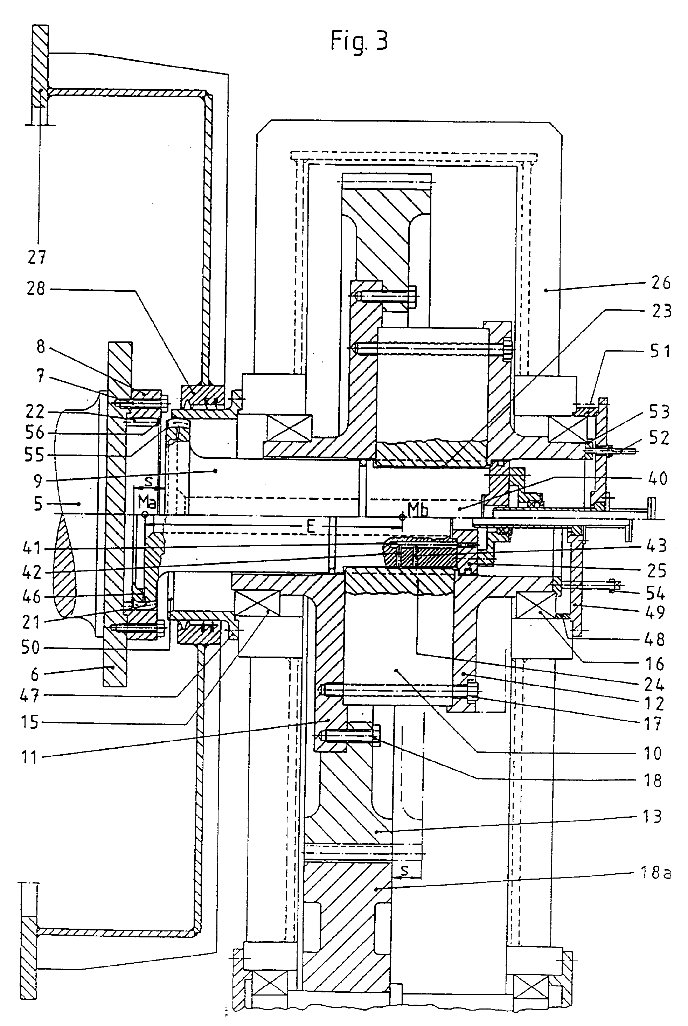

Fig. 3 zeigt einen Teilausschnitt eines vom Kurbelwellenende (5) angetriebenen freistehenden Übersetzungsgetriebes (26).

Derartige Kurbelwellengetriebe sind entweder fest mittels Fußleisten (nicht gezeichnet) auf dem Motorfundament oder je nach Schiffskonstruktion, auf einem getrennten Fundament verschraubt.

Im Fall besonderer Anforderungen hinsichtlich Minderung der Übertragung von Geräuschemissionen durch Körperschall werden freistehende Übersetzungsgetriebe vielfach auf elastomerischen Blöcken und Schwingmetallelementen auf ihren Fundamenten angeordnet.

Betriebsbedingt bietet sich für solche schwierigen Antriebe der Einbau einer doppelkardansich wirksamen Zahngelenkspindel (9) an, um Radial- und Axialbewegungen von der Antriebs- zur Abtriebsseite auszugleichen.
Sonst liegt der Unterschied der Getriebeausführung von Fig. 1 und 2 zu Fig. 3 im wesentlichen nur in der Trennung des Kurbelwellengehäuses (27) vom Getriebegehäuse (26) im Bereich der Abdichtung (28). Alle übrigen Merkmale, was Einzelheiten, Funktion, Anordnung und Ausgestaltung der doppelkardanischen Zahngelenkspindel (9), drehschwingungsdämpfenden Kupplung (10) sowie Antriebsrad (13) angeht, sind diese miteinander vergleichbar.

Allerdings wird die Ausführungsart der drehschwingungsdämpfenden Kupplung (10) durch verschiedene, hauptsächliche aber betriebsbedingte, einbautechnische, wirtschaftliche Kriterien der Drehschwingungsberechnung bestimmt, wobei auch auf eine optimale Winkelbeweglichkeit der mit der Kupplung (10) verbundenen Zahngelenkspindel (9) besonderer Wert gelegt wird.

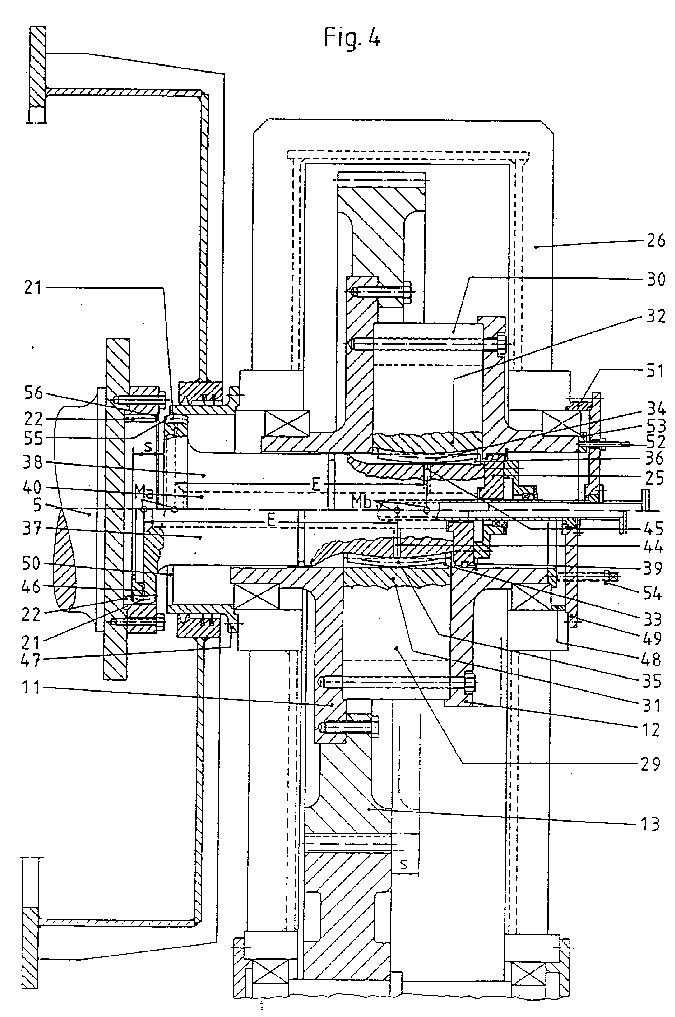

Fig. 4 zeigt jeweils im oberen und unteren Halbschnitt eine drehschwingungsdämpfende Kupplung (29, 30), dessen Nabe (31, 32) mit einer geraden Innenverzahnung (33) und gewölbten Außenverzahnung (35) oder mit einer gewölbten Innenverzahnung (34) und einer geraden Außenverzahnung (36) jeweils ein Bogenzahngelenk bildet, so daß die Zahngelenkspindel (37, 38) zwischen den Drehpunkten "Ma - Mb" zusammen mit dem Zahneingriff (21, 22) doppelkardanaisch wirkt. Die Haben (31, 32) werden zwischen den Trägern (11, 12) axial geführt und sind mit ihren Federelementen verschiedener Konstruktionen im Rahmen zulässiger Verdrehwinkel nur in Umfangsrichtung beweglich.

Axial geführt ist die doppelkardanische Zahngelenkspindel (37, 38) einerseits mittels der Endplatte (25) und andererseits durch den Sicherungsring (39), welche auch die Rückstellkräfte aus den Verzahnungseingriffen (21, 22, 33, 34, 35, 36) aufnehmen.

Grundsätzlich erfolgt die Zuordnung der Zahngelenkspindel (9, 37, 38) in der einen oder anderen Lösung in Abhängigkeit vom Drehmoment, Drehfedercharakteristik, Größe der aufzunehmenden Parallel-/Winkelverlagerungen und Wirtschaftlichkeit.

In Verbindung mit den drehschwingungsdämpfenden Kupplungen (10, 37, 38) sind sie so konzipiert, daß sie in Anbaugetrieben (1) und freistehenden Getrieben (26) eingebaut werden, da die Parameter für die Berechnung der doppelkardanischen Gelenkspindeln (9, 37, 38) bei gleichem Abstand "E" der Drehpunkte "Ma" zu "Mb", gleich große Winkelabweichungen vorausgesetzt, identisch sind.

Aus Fig. 1 bis Fig. 4 ist ersichtlich, daß sowohl der kurbelwellenseitigen Gelenkspindelverzahnung (21, 22) als auch den Verzahnungseingriffen (23, 33, 34, 35, 36) in den drehschwingungsdämpfenden Kupplungen (10, 29, 30) durch die zentrische Hohlbohrung (40) der Zahngelenkspindel ( 9, 37, 38) Schmieröl zugeführt wird, da eine kontinuierliche wie ausreichende Ölversorgung vonnöten ist.

Von der zentrischen Hohlbohrung (40) ausgehend strömt durch die Kanäle (41, 42, 43) Drucköl in die Verzahnung (23), Federpaket (24) und Kupplung (10), während die Radialbohrungen (44, 45, 46) die Bogenzahngelenke mit ihren Verzahnungen (21, 22, 33, 34, 35, 36) und die Kupplung (29, 30) mit Drucköl von einer für das komplette Getriebe (1, 26) ausgelegten Pumpenanlage (nicht gezeichnet) versorgen.

Im jeweils unteren Halbschnitt der Fig. 1 bis 4 ist die Zahngelenkspindel (9, 37) kraftschlüssig mit der Kurbelwelle (5) verbunden, dargestellt.

Im Falle einer Havarie sowie etwaiger Folgen aus dieser muß in kürzester Zeit eine Kraftflußtrennung zwischen Kurbelwelle (5) und Zahngelenkspindel (9, 37, 38) stattfinden, damit der Motor mit angeschlossenem Propeller weiterlaufen kann. Hierdurch bleibt das Schiff manöverierfähig und das Getriebe kann inspiziert und beschädigte Teile im Stillstand ausgetauscht werden.

Die Erfindung sieht insbesondere die Auswechselbarkeit aller wichtigen Teile, einschließlich die der drehschwingungsdämpfenden Kupplung (10, 29, 30) an Bord vor, um die Wiederinbetriebnahme des Kurbelwellengetriebes (1, 26) kurzfristig sicherzustellen und beispielsweise wegen zu geringer Bordstromkapazität wirtschaftliche Schäden zu begrenzen.

Zahngelenkspindel (9, 37, 38), drehschwingungsdämpfende Kupplung (10, 29, 30), Hohlwellenträger (11, 12) und Antriebsrad (13) sind durch die Schraubverbindungen (17, 18) als einheitliches Gebilde anzusehen, welches im Betriebszustand durch den Zentrierring (47), Distanzring (48) sowie Verschlußdeckel (49) im Getriebe (1, 26) axial fixiert ist.

Diese verschraubte Einheit ist nur im kurbelwellenseitigen Zahneingriff (21, 22) vom Kraftfluß des Motors im Stillstand trennbar, wenn sie axial in die strichpunktierte Position "s" verschoben wird.

Zuvor ist der Distanzring (48) herauszunehmen und beim Entkupplungsvorgang wird die Bogenverzahnung (21) der Zahngelenkspindel (9, 37, 38) von der konischen Anfasung (50) des Zentrierringes (47) erfaßt, damit sich die Zahngelenkspindel (9, 37, 38) mit ihrem Außendurchmesser im Innendurchmesser des Zentrierringes (47) abstützt.

In den oberen Halbschnitten von Fig. 1 bis Fig. 4 ist die ausgerückte Position "s" der Einheit und Abstützung der Zahngelenkspindel (9, 37, 38) im Innendurchmesser des Zentrierringes (47) einschließlich Kupplung (10, 29, 30), angeschraubten Trägern (11, 12) und Antriebsrad (13) dargestellt. Dabei sichert der Haltering (51) zusammen mit der Zugvorrichtung (52) ein unbeabsichtigtes Wiedereinrücken bei Auftreten von Vibrationen, schwerem Seegang, Schräglage des Schiffes oder längeren Reparaturfristen.

Zum Ausrücken der Zahngelenkspindel ( 9, 37, 38) aus der Innenverzahnung (22) des kurbelwellenseitigen Zahnkranzes (8) ist die Anbringung einer mechanischen Zugvorrichtung (52) an dem Ring (53), der wiederum mit dem Träger (12) verschraubt ist, erforderlich.

Das Einrücken erfolgt durch axiales Verschieben der Einheit mittels Druckschraube (54), die in passende Gewindelöcher des Verschlußdeckels (49) eingedreht wird und mit dieser ein kraftschlüssiger Zahneingriff bei der Verzahnung (21, 22) an der Kurbelwelle hergestellt wird, nach dem zuvor die Zugvorrichtung (52) entfernt wurde.

Wie bei schaltbaren Zahnkupplungen bekannt, besitzt auch die Bogenzahnnverzahnung (21) mit zugehöriger geraden Innverzahnung (22) jeweils stirnseitig nach außen hin profilgerechte Anfasungen (55, 56), die das Einrücken erleichtern.

## Patentansprüche

1. Kurbelwellengetriebe, bei dem die Abtriebswelle (5) eines Hauptmotors an dessen freien Wellenende gegenüber der Hauptwellenleitung durch eine elastische Kupplung verbunden ist, das Kurbelwellengetriebe mit seinem Gehäuse direkt als Anflanschgetriebe (1,2) mit Motor ausgeführt ist,
oder das Kurbewellengetriebe mit seinem Gehäuse (26) als selbständige Baueinheit unabhängig vom Motor auf dem gleichen oder einem getrennten Fundament befestigt ist,
**dadurch gekennzeichnet,**
a) daß zur Aufnahme der Wechselmomente des Motors von dessen Kurbelwelle (5) eine doppelkardanische Zahngelenkspindel (9,37,38) und eine drehschwingungsdämpfende Kupplung (10,29,30) vorgesehen sind, von welchen die Kupplung als Hohlwelle und Träger (11,12) des Antriebsrades (13) dient und in dieses kraftschlüssig eingebaut ist,
b) so daß keine unzulässigen dynamischen Zusatzkräfte in der ersten oder nachfolgenden Getriebestufen (13,18a,19) übertragen werden, und
c) so daß die Übertragung solcher Kräfte auf Aggregate, welche mit dem Getriebe an dessen Abtriebswellenende (20) verbunden sind, vermieden werden.

2. Kurbelwellengetriebe nach Anspruch 1, bei dem im Falle der Notwendigkeit einer Inspektion desselben, Austausch von Federelementen zur Änderung der Dämpfungscharakteristik, Lager, Zahnräder und der angekuppelten Aggregate die Zahngelenkspindel (9, 37, 38) zusammen mit dem Antriebsrad (13) einschließlich angeschraubter Dämpfungs-Kupplung (10, 29, 30) durch achsiales Verschieben so außer Eingriff gebracht wird, daß die Hauptwellenleitung des Hauptmotors auf der gegenüberliegenden Seite weiter in Betrieb bleiben kann.

3. Kurbelwellengetriebe nach Anspruch 1 und 2, bei welchem der kurbelwellenseitige Zentrierring (47) am Getriebegehäuse im Innern eine konische Anfasung (50) besitzt und die ausgerückte Zahngelenkspindel (9, 37, 38) im Innendurchmesser des Zentrierringes (47) gehalten wird.

4. Kurbelwellengetriebe nach Anspruch 1 bis 3, bei dem die Außen- und Innenteile der doppelkardanischen Zahngelenkspindel (9, 37, 38) in Abhängigkeit von Art sowie Ausführung der drehschwingungsdämpfenden Kupplung (10, 29, 30), Größe der zu übertragenden Dreh- und Wechselmomente, Drehzahlen sowie Wellenverlagerungen mit gerad- oder konvex hergestellten Außen-/Innenverzahnungen (21, 22, 23, 33, 34, 35, 36) jeweils in geeigneter Weise gepaart werden können.

5. Kurbelwellengetriebe nach Anspruch 1 bis 4 mit einer doppelkardanischen Zahngelenkspindel (9, 37, 38) durch eine in dieser mittig angeordneten Axialbohrung (40) sowie entsprechenden Radialbohrungen (42, 43, 44, 45, 46) alle miteinander in Eingriff stehenden Kupplungsverzahnungen (21, 22, 23, 33, 34, 35, 36) und Drehschwingungsdämpfungskupplung (10, 29, 30) mit Drucköl versorgt wird.

6. Kurbelwellengetriebe nach Anspruch 1 bis 5 mit einer doppelkardanischen Zahngelenkspindel (9, 37, 38), welche an der Kurbelwelle (5) gegenüberliegenden Stirnseite des Getriebes (1, 26) und Zahngelenkspindel (9, 37, 38) eine Vorrichtung ( 52, 53, 54) angebracht wird, die das in Anspruch 2 beschriebene achsiale Verschieben zum Aus- und Einrücken der Zahngelenkspindel (9, 37, 38) ermöglicht.

7. Kurbelwellengetriebe nach Anspruch 1 bis 6, in welchem die drehschwingungsdämpfende Kupplung (10, 29, 30) zum Schutz vor Überlastung mit einer Drehmomentbegrenzungseinrichtung ausgeführt ist.

## Claims

1. Crankshaft gearing, wherein the driven shaft (5) of a main engine is connected at the free shaft end of the main engine opposite the main shaft line by means of a flexible coupling, the crankshaft gearing with its housing is designed directly as a flange-mounted gearing (1, 2) with the engine, or the crankshaft gearing with its housing (26) is attached as an independent component independent from the engine to the same foundation or to a separate foundation,
characterised in that
a) a double cardanic toothed articulated spindle (9, 37, 38) and a torsional vibration damping coupling (10, 29, 30) are provided in order to absorb the alternating moments of the engine from its crankshaft (5), of which the coupling serves as the hollow shaft and carrier (11, 12) of the drive wheel (13) and is installed in the said drive wheel in a positive manner,
b) so that no inadmissible dynamic additional forces are transmitted in the first or subsequent gearing stages (13, 18a, 19), and
c) so that the transmission of such forces to units, which are connected to the gearing at its driven shaft end (20), is prevented.

2. Crankshaft gearing according to claim 1, wherein, when it is necessary to inspect the crankshaft gearing, to replace the resilient elements in order to change the damping characteristics, bearings, gear wheels and connected units, the toothed articulated spindle (9, 37, 38) together with the drive wheel (13) including the screwed-on damping coupling (10, 29, 30) is disengaged by an axial displacement, in such a way that the main shaft line of the main engine on the opposite side can continue to remain in operation.

3. Crankshaft gearing according to claims 1 and 2, wherein the centring ring (47) on the crankshaft side at the gearing housing has a conical chamfered section (50) in the interior and the disengaged toothed articulated spindle (9, 37, 38) is held in the inner diameter of the centring ring (47).

4. Crankshaft gearing according to claims 1 to 3, wherein the outer and inner parts of the double cardanic toothed articulated spindle (9, 37, 38) can in each case be paired in a suitable manner with straight or convex outer/inner toothing (21, 22, 23, 33, 34, 35, 36) in dependence upon the type as well as the design of the torsional vibration damping coupling (10, 29, 30), upon the size of the rotational and.alternating moments to be transmitted, upon the rotational speeds as well as upon the shaft displacements.

5. Crankshaft gearing according to claims 1 to 4, having a double cardanic toothed articulated spindle (9, 37, 38), wherein all coupling toothings (21, 22, 23, 33, 34, 35, 36) which are in engagement with each other and the torsional vibration damping coupling (10, 29, 30) are supplied with oil under pressure by means of an axial bore (40) arranged in the middle of the said toothed articulated spindle as well as corresponding radial bores (42, 43, 44, 45, 46).

6. Crankshaft gearing according to claims 1 to 5 having a double cardanic toothed articulated spindle (9, 37, 38) which is attached at faces of the gearing (1, 26) and of the toothed articulated spindle (9, 37, 38) at the opposite end from the crankshaft (5) to a device (52, 53, 54) which enables the axial displacement as described in claim 2 to be carried out for the purpose of disengaging and engaging the toothed articulated spindle (9, 37, 38).

7. Crankshaft gearing according to claims 1 to 6, in which the torsional vibration,damping coupling (10, 29, 30) is fitted with a device for limiting the torque for the purpose of providing protection from overloading.

## Revendications

1. Transmission de vilebrequin dans laquelle l'arbre de sortie (5) d'un moteur principal à son extrémité libre, en vis-à-vis de la transmission principale est relié par un dispositif d'accouplement élastique, la transmission de vilebrequin avec son carter est configurée directement en tant que mécanisme bridé (1,2) avec le moteur
ou la transmission de vilebrequin avec son carter (26) est fixée en tant qu'unité de construction autonome, indépendante du moteur sur le même ou un fondement isolé,
**caractérisé en ce**
a) que pour la reprise des moments alternatifs du moteur par son vilebrequin (5), une broche articulée à dents (9,37,38) à double cardan et un dispositif d'accouplement (10,29,30) amortissant les vibrations torsionnnelles sont prévus, desquels le dispositif d'accouplement sert d'arbre creux et de support (11,12) de la roué de commande (13) et est logé dans cette dernière par adhérence.
b) de sorte qu'aucune force supplémentaire dynamique inadmissible n'est transmise dans le premier ou dans les étages (13, 18a, 19) suivants du mécanisme, et
c) de sorte que la transmission de telles forces sur des organes, lesquels sont reliés avec le mécanisme à son extrémité de l'arbre de sortie (20), sont évitées.

2. Transmission de vilebrequin selon la revendication 1, dans laquelle, en cas de nécessité d'une inspection de celle-ci, le remplacement d'éléments de ressort pour modification de la caractéristique d'amortissement, du palier, des roues dentées et des organes accouplés, la broche articulée à dents (9,37,38), ensemble avec la roué de commande (13) comprenant le dispositif d'accouplement d'amortissement (10,29,30) vissé, sont par déplacement axial mis hors fonctionnement de telle manière que la transmission de l'arbre principal du moteur principal, située sur le côté opposé, peut rester en fonctionnement.

3. Transmission de vilebrequin selon la revendication 1 et 2 dans laquelle l'anneau de centrage (47), situé du côté vilebrequin, possède au carter d'engrenage, à l'intérieur un chanfreinage (50) conique et la broche articulée à dents (9,37,38) désembrayée, est tenue dans le diamètre intérieur de l'anneau de centrage (47).

4. Transmission de vilebrequin selon la revendication 1 à 3 dans laquelle les parties extérieures et intérieures de la broche articulée à dents (9,37,38) à double cardan, en fonction du type et de la réalisation du dispositif d'accouplement (10,29,30) amortissant les vibrations torsionnelles, de l'importance des couples et des moments alternatifs à transmettre, du nombre de tours ainsi que des déplacements d'arbres avec des dentures extérieures et intérieures (21,22,23, 33,34,35,36), fabriquées d'une manière droite ou convexe, peuvent d'une manière adéquate être respectivement disposées par paire.

5. Transmission de vilebrequin selon la revendication 1 à 4 avec une broche articulée à dents à double cardan (9,37,38), alimentée en huile de pression par un alésage axial (40) disposé au milieu de celle-ci ainsi que des alésages radiaux respectifs (42,43,44,45,46), toutes les dentures de l'accouplement (21,22,23,33,34,35,36) se trouvant engrenées les unes avec les autres et le dispositif d'accouplement amortissant les vibrations torsionnelles (10, 29,30).

6. Transmission de vilebrequin selon la revendication 1 à 5 avec une broche articulée à dents (9,37,38) à double cardan laquelle est, du côté frontal du mécanisme (1,26), opposé au vilebrequin et à la broche articulée à dents (9,37,38), montée sur un dispositif (52,53,54) qui permet d'effectuer le déplacement axial, décrit dans la revendication 2, afin d'obtenir le débrayage et l'embrayage de la broche articulée à dents (9,37,38).

7. Transmission de vilebrequin, selon la revendication 1 à 6 dans laquelle le dispositif d'accouplement amortissant les vibrations torsionnelles (10,29,30) est réalisé, en tant que protection de surcharge, avec un dispositif limitant le couple.
